**Europäisches Patentamt**

**European Patent Office**

**Office européen des brevets**

(19)

(11) Veröffentlichungsnummer: **0 030 746**

**A1**

(12) # EUROPÄISCHE PATENTANMELDUNG

(21) Anmeldenummer: **80201025.6**

(22) Anmeldetag: **29.10.80**

(51) Int. Cl.³: **F 02 C 6/16**
**B 65 G 5/00, E 21 F 17/16**

(30) Priorität: **14.12.79 CH 11088/79**

(43) Veröffentlichungstag der Anmeldung:
**24.06.81 Patentblatt 81/25**

(84) Benannte Vertragsstaaten:
**CH DE GB LI SE**

(71) Anmelder: **BBC Brown, Boveri & Cie.**
**(Aktiengesellschaft)**

**CH-5401 Baden(CH)**

(72) Erfinder: **Schwarzenbach, Alfred, Dipl.-Ing.**
**Weizenstrasse 5**
**CH-5430 Wettingen(CH)**

(54) **Einrichtung zur Vermeidung des Ausblasens der Wasservorlage von Gleichdruckluftspeicheranlagen für Gasturbinenkraftwerke.**

(57) Einrichtung zur Vermeidung des Ausblasens der Wasservorlage von Gleichdruckluftspeicheranlagen für Gasturbinenkraftwerke, die dazu bestimmt ist, als vorzugsweise vorgefertigte Einheit am oberen Ende des Steigrohres der Luftspeicherkaverne eingebaut zu werden, mit Entlüftungsrohren (15,16,17), deren untere Enden in der Höhe gestaffelt liegen, ferner mit Leitelementen (18,19,20), die einerseits einen Teil des aus dem Steigrohr hinaufströmenden Wasser/Luft-Gemisches in die Entlüftungsrohre leiten und andererseits einen verlängerten Strömungskanal für das restliche, direkt in das Ausgleichsbecken strömende Wasser/Luft-Gemisch bilden.

FIG. 4

EP 0 030 746 A1

- 1 -

Einrichtung zur Vermeidung des Ausblasens der Wasservorlage von Gleichdruckluftspeicheranlagen für Gasturbinenkraftwerke

Die vorliegende Erfindung betrifft eine Einrichtung zur Vermeidung des Ausblasens der Wasservorlage von Gleichdruckluftspeicheranlagen für Gasturbinenkraftwerke nach dem Oberbegriff des Patentanspruchs 1.

Gleichdruckluftspeicheranlagen für Gasturbinenkraftwerke benötigen gegenüber gleich leistungsfähigen Luftspeicheranlagen mit variablem Luftdruck, der im Betrieb zwischen gewissen Grenzen schwanken darf, nur etwa ein Drittel des Volumens der letzteren. Dementsprechend sind der bauliche Aufwand und die Erstellungskosten einer Kaverne für Gleichdruckspeicherung weit geringer als bei Kavernen für variablen Luftdruck.

Zur Konstanthaltung des Luftdruckes bei Gleichdruckspeicherung dient eine das in der Kaverne verbrauchte Luftvolumen ausgleichende Wasservorlage mit einer Wassersäule, die in ein freies, gewöhnlich an der Erdoberfläche liegendes Bassin mündet und deren statische Druckhöhe dem in der Kaverne aufrechtzuerhaltenden Druck entspricht. Beim Laden der Kaverne,

- 2 -

die bei heutigen Anlagen in 600-800 m Tiefe liegt, entsprechend einem statischen Druck der Wassersäule von 60-80 bar, wird das Wasser in das Bassin hinaufgedrückt, beim Entladen läuft das Wasser aus dem Bassin in die Kaverne nach, um den gleichen Druck sicherzustellen.

Beim Betrieb von Luftspeichergasturbinenanlagen hat sich gezeigt, dass beim Laden der Kaverne die in der Wasservorlage aufsteigende Wassersäule die in ihr gelöste Luft freigibt, wodurch Luftblasen mit nach oben hin rasch zunehmendem Volumen entstehen, die eine Dichteabnahme in der Wassersäule und damit einen Druckabfall in der Kaverne bewirken. Im Extremfall könnte die Wassersäule vom Druckluftpolster ausgeblasen werden und die Kaverne sich somit vollständig entleeren.

Gegenüber der normalen Lösungsgeschwindigkeit von Luft in ruhendem Wasser erfolgt in der Kaverne die volle Sättigung infolge der starken Verwirbelung des Wassers bei den Lade- und Entladevorgängen rascher, da hierbei bald einmal alle Wasserteilchen mit der Luft in Berührung kommen. Die dabei vom Wasser aufgenommene Gewichtsmenge an Luft ist proportional dem Druck, der, wie gesagt, bei ausgeführten Anlagen zwischen 60 und 80 bar liegt. Ueber die dabei gelöste Luftmenge gibt folgender Vergleich Aufschluss:

Bei 1 bar Luftdruck und $10^{\circ}C$ Temperatur enthält 1 m³ Wasser (= 1000 kg) 29,2 g Luft.

Bei 60 bar Druck und $10^{\circ}C$ Temperatur enthält 1 m³ Wasser

- 3 -

1,7 kg Luft, also die etwa 58-fache Gewichtsmenge. Bei Atmosphärendruck entsprechen diese 1,7 kg Luft ca. 1,32 $m^3$. Ein von 60 bar Druck auf atmosphärischen Druck entspanntes Wasser/Luft-Gemisch enthält also mehr Luft als Wasser.

Wenn derart mit Luft gesättigtes Wasser aus der Kaverne nach oben steigt, so wird durch den abnehmenden hydrostatischen Druck die Luft frei und bildet immer grössere Blasen. Die durchschnittliche Dichte der Wassersäule wird damit immer kleiner und der Druck in der Kaverne sinkt entsprechend. Dies kann, wenn nicht entsprechende Vorkehrungen getroffen werden, zum Ausblasen des Druckluftpolsters mit der Wassersäule führen.

Eine bisher bekanntgewordene Massnahme zur Verhütung dieses Ausblasens besteht darin, das die Wassersäule enthaltende Steigrohr in einem U-förmigen Bogen unter die Sohle der Kaverne hinab zu verlängern. Der tiefste Punkt des Steigrohrs muss dabei um mindestens 0,15 h unter dem jeweiligen Wasserspiegel in der Kaverne liegen, wobei h die wirksame Druckhöhe, d.h., die Differenz zwischen den geodätischen Höhen des Oberwasserspiegels im Ausgleichsbecken und des Kavernenwasserspiegels bedeutet.

Für h = 600 m würde dies bedeuten, dass das bereits 600 m lange Steigrohr noch um mindestens 90 m tiefer geführt

- 4 -

werden müsste, und zwar doppelt, was einen untragbar hohen
baulichen Mehraufwand darstellt.

Mit der vorliegenden, im kennzeichnenden Teil des Patentanspruchs 1 definierten Erfindung soll dieser schwerwiegende
Nachteil vermieden werden.

Die Erfindung wird im folgenden unter Bezugnahme auf in
der Zeichnung dargestellte Ausführungsbeispiele näher beschrieben.

In der Zeichnung stellen dar:

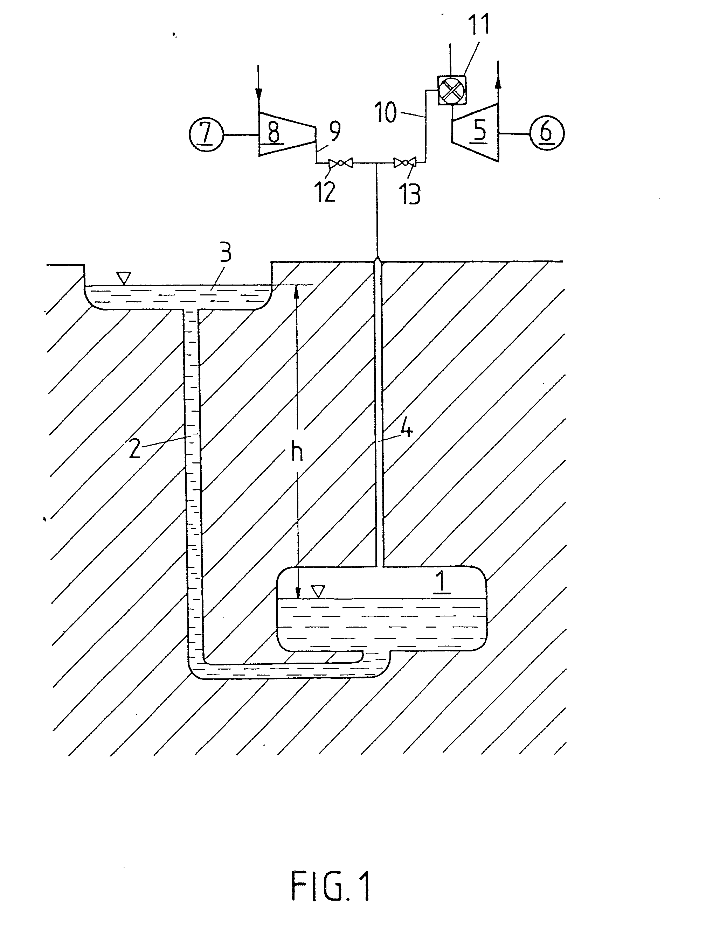

Fig. 1  zur Illustration des Standes der Technik schema-
        tisch ein Luftspeichergasturbinenkraftwerk konven-
        tioneller Bauart,

Fig. 2  einen Längsschnitt durch eine erste Ausführungsform
        einer erfindungsgemässen Einrichtung zur Vermeidung
        des Ausblasens der Wassersäule,

Fig. 3  den zu Fig. 2 gehörigen Querschnitt durch III-III,

Fig. 4  eine Variante der in Fig. 2 dargestellten Einrichtung im Längsschnitt,

Fig. 5  und 6 eine dritte Ausführungsform der erfindungsgemässen Einrichtung im Längsschnitt bzw. Querschnitt nach VI-VI, und die

Fig. 7  und 8 Längsschnitt bzw. Querschnitt nach VIII-VIII

- 5 -

durch eine weitere Ausführungsform.

Bei der schematisch dargestellten Gleichdruckluftspeicheranlage befindet sich in der Sohle einer Kaverne 1 die Mündung eines Steigrohres 2, dessen oberer druckerzeugender Teil mit der Höhe h zwischen den Wasserspiegeln der Kaverne 1 und eines Ausgleichsbeckens 3 senkrecht ausgebildet ist. Das Steigrohr setzt sich nach unten in einen U-förmigen Kanal fort, der die genannte Mündung an der Sohle der Kaverne bildet. Um ein Ausblasen der Wassersäule und damit der Kavernenluft infolge der eingangs beschriebenen Druckhöhenverminderung der Wassersäule zu vermeiden, müsste sich, wie ebenfalls in der Einleitung erwähnt, dieser U-förmige Kanal ohne die erfindungsgemässen Massnahmen um 0,15 h unter den im Betrieb tiefsten zulässigen Kavernenwasserspiegel hinab erstrecken, was mit einer wesentlichen Erhöhung der Anlagekosten verbunden ist.

Aus dem Luftraum der Kaverne 1 führt eine Luftspeise- und -entnahmeleitung 4 zu der übertage installierten Gasturbinenanlage, von der in der Zeichnung als Hauptteile die Gasturbine 5 zum Antrieb eines Elektrogenerators 6, ein von einem Elektromotor 7 antreibbarer Luftverdichter 8 sowie die entsprechenden Luftzuleitungen 9 und 10 zwischen der Leitung 4 und dem Verdichter 8 bzw. der Brennkammer 11 und den zugehörigen Umschaltventilen 12 bzw. 13 dargestellt sind.

Der Erfindung liegt die Idee zugrunde, den Strömungsweg des Luft/Wasser-Gemisches zu verlängern und durch Umlenkung der Strömung im obersten Teil des Steigrohres 2 möglichst viel

- 6 -

Luft vom Wasser zu trennen, damit sich ungeachtet der vorhandenen Luftblasen eine durchgehende, ununterbrochene Wassersäule über die Steigrohrlänge ausbilden kann, um den vollen hydrostatischen Druck zu erhalten, der imstande ist, dem in der Kaverne maximal auftretenden Druck das Gleichgewicht zu halten.

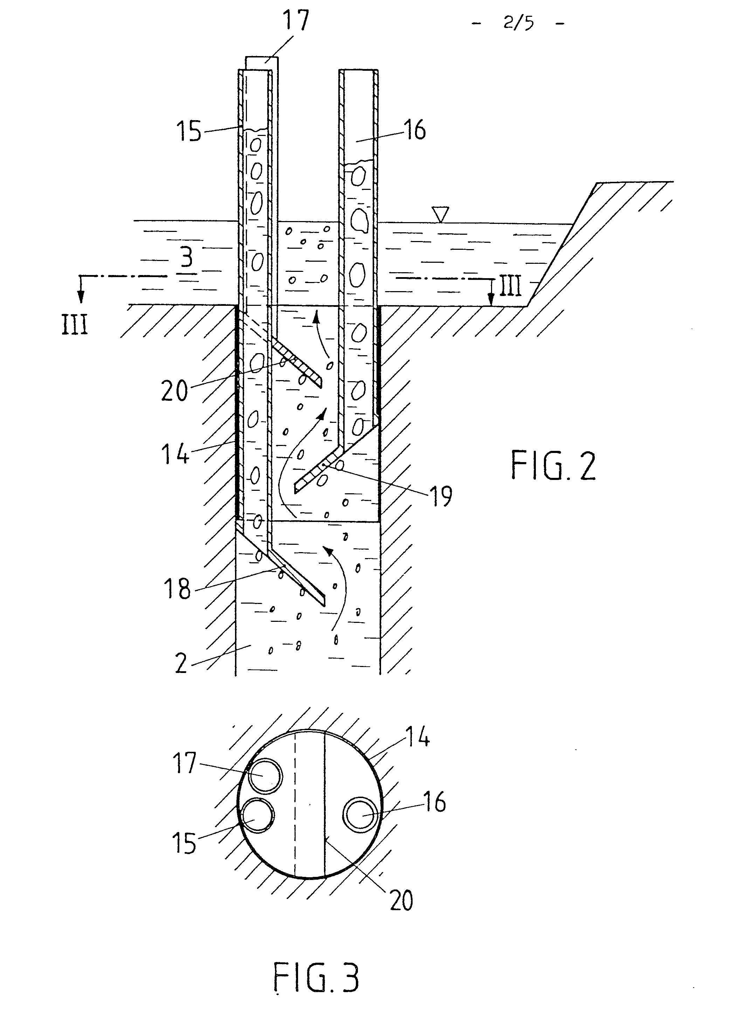

Die in den Fig. 2 und 3 dargestellte Einrichtung, mit der dies erreicht werden kann, bildet eine vorfabrizierte Einheit, die nach Fertigstellung des Steigrohres 2 an dessen oberem Ende eingesetzt und mittels nicht dargestellter Halteelemente im Steigrohrschacht verankert und einbetoniert wird. Ein äusserer Blechmantel 14 bildet das Gerüst der Einrichtung, an der ihre anderen Elemente vorzugsweise durch Schweissung befestigt sind. Bei diesen Elementen handelt es sich um drei Entlüftungsrohre 15, 16 und 17, die am inneren Umfang des Blechmantels 14 angeordnet sind und sich nach oben weit über den höchsten Wasserstand des Ausgleichsbeckens hinaus erstrecken. Ihre unteren Enden sind abgeschrägt und verschieden tief in das Steigrohr hinuntergezogen. Das Entlüftungsrohr 15 erstreckt sich am weitesten nach unten, das Entlüftungsrohr 17 endet knapp unterhalb der Sohle des Ausgleichsbeckens 3 und das den beiden Rohren 15 und 17 gegenüberliegende Entlüftungsrohr 16 endet auf halber Höhe dazwischen. Die unteren Enden dieser drei Entlüftungsrohre sind von schräg nach unten gerichteten Leitplatten 18, 19, 20 umschlossen, die sich in der Projektion, siehe Fig. 2, jeweils über den halben Querschnitt des Steigrohres hinaus erstrecken.

Die Aufgabe dieser Leitplatten besteht darin, jeweils einen

- 7 -

Teil des beim Füllen der Kaverne durch das Steigrohr in
das Ausgleichsbecken entweichende Wasser/Luft-Gemisches in
die betreffenden Entlüftungsrohre zu leiten, in denen sich
dann wegen ihrer grossen Höhe die Luft vom Wasser trennen
kann, ohne dass Wasser aus ihnen heraus mitgerissen wird.
Der restliche, von den drei Entlüftungsrohren nicht erfasste Wasserstrom windet sich wie durch die Pfeile angedeutet um die drei Leitplatten herum durch den Restquerschnitt nach oben direkt in das Ausgleichsbecken, wobei
die Geschwindigkeit des sonst unter Umständen sehr rasch
hochschiessenden Wasser/Luft-Gemisches gebremst wird und
die Luft sich ausscheiden kann, ohne dass allzuviel Wasser
über das Niveau des Ausgleichsbeckens hinauf mitgerissen
werden kann.

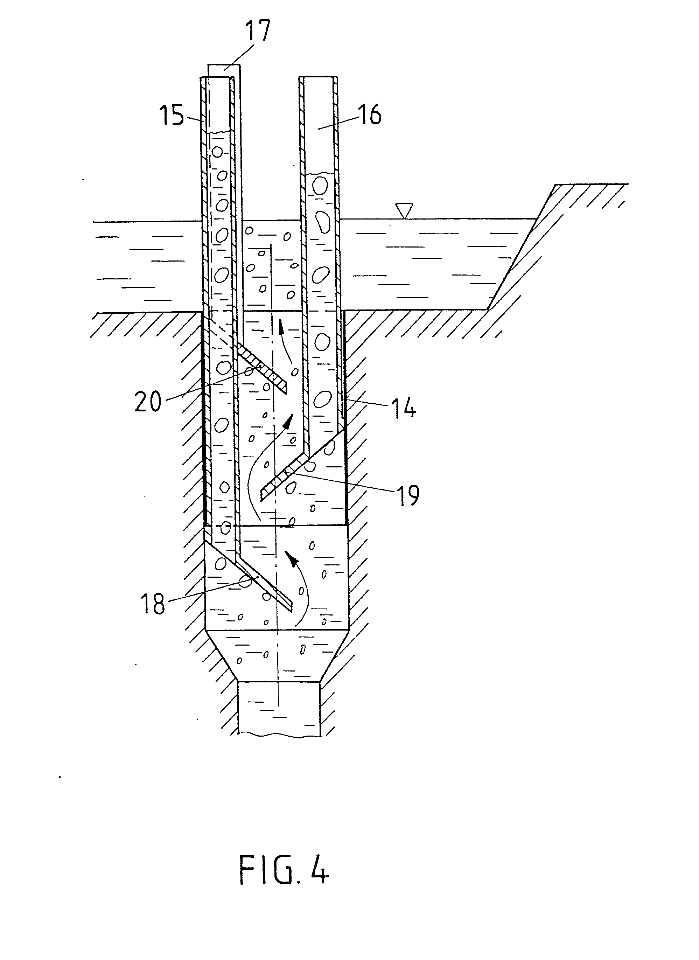

Die in Fig. 4 dargestellte Einrichtung unterscheidet sich
von der vorstehend beschriebenen lediglich dadurch, dass
ihr Durchmesser grösser ist als der Steigrohrdurchmesser.
Ihre Elemente sind daher mit den gleichen Bezugszeichen bezeichnet wie bei der Ausführung nach den Fig. 2 und 3.

Das Steigrohr muss also an seinem oberen Ende erweitert
werden, um die Einrichtung unterbringen zu können. Diese
Ausführung hat den Vorteil, dass die freien Strömungsquerschnitte und das Volumen grösser sind als im unteren Teil
des Steigrohres, so dass die Strömungsgeschwindigkeit in
ihr kleiner wird und mehr Zeit zur Ausscheidung der Luftblasen zur Verfügung steht als im vorigen Beispiel.

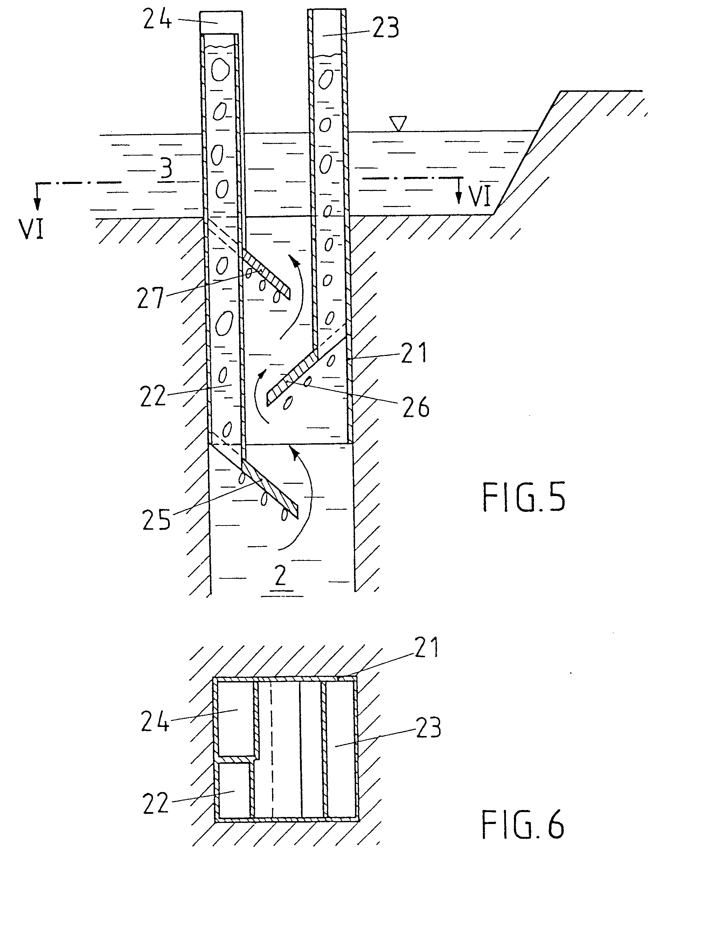

Bei der Variante nach den Fig. 5 und 6 ist der Querschnitt
des Blechmantels 21 quadratisch ausgeführt und die Entlüftungsrohre 22, 23 und 24 weisen rechteckigen Querschnitt auf, dessen Grösse der jeweils aufzunehmenden Menge des Wasser/Luft-Gemisches entsprechend ausgeführt ist. Im oberen Bereich haben die Luftblasen ein grösseres spezifisches Volumen, infolgedessen sind auch die Querschnitte der zwei oberen Entlüftungsrohre 23 und 24 grösser als jener des untersten Rohres 22. Die Leitplatten 25, 26 und 27 weisen im dargestellten Vertikalschnitt die gleiche Stellung auf wie bei den oben beschriebenen Ausführungen.

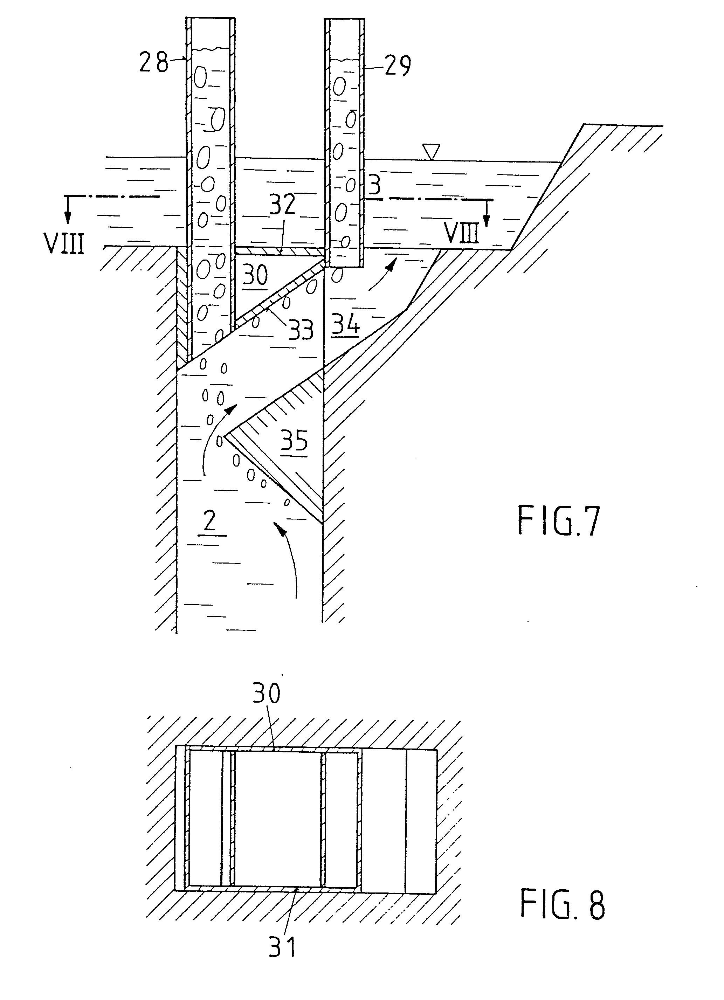

Bei der in den Fig. 7 und 8 dargestellten Variante sind nur zwei Entlüftungsrohre 28 und 29 vorgesehen, die mit einem Kasten, dessen Seitenwände mit 30 bzw. 31 und dessen obere und untere Begrenzungswand mit 32 bzw. 33 bezeichnet sind, eine einbaufertige Einheit bilden. Dabei bildet die untere Begrenzungswand die obere Begrenzung eines Schrägkanals 34, dessen untere Begrenzung ein Umlenkkörper 35 bildet. Der Schrägkanal 34 setzt sich ausserhalb des Steigrohrquerschnitts fort und mündet neben dem kürzeren Entlüftungsrohr 29 in das Ausgleichsbecken 3. Man erhält auf diese Weise bei Verwendung von nur zwei Entlüftungsrohren einen längeren Weg für das nach dem Passieren der Entlüftungsrohre 28 und 29 bereits teilweise entlüftete Wasser/Luft-Gemisch, das dann schon ziemlich beruhigt in das Ausgleichsbecken einströmt.

Der Umlenkkörper 35 kann als massiver Betonkörper getrennt von oder in einem Stück mit der Steigrohrauskleidung ausgeführt werden. In diesem Falle würde auch der ausserhalb des Steigrohrquerschnitts liegende Teil des Schrägkanals 34 vorzugsweise ausbetoniert werden.

Es ist aber auch möglich, die Entlüftungsrohre 28, 29 und

- 9 -

die Begrenzungswände 32 und 33 mit einem als geschweisste Blechkonstruktion ausgeführten Umlenkkörper 35 und ebenfalls aus Blech bestehenden Begrenzungswänden für den Schrägkanal 34 zu einer einbaufertigen Einheit zu verbinden, die vollständig in der Werkstatt herstellbar ist. Damit könnten die Kosten gegenüber der Ausführung nach den Fig. 7 und 8 verringert werden.

Für alle hier beschriebenen Ausführungen gilt, dass ihr Einbau an der Steigrohrmündung keine zusätzlichen teuren Tiefbauarbeiten erfordert. Es handelt sich dabei also um eine sehr wirtschaftliche Lösung des eingangs beschriebenen Problems.

- 10 -

B e z e i c h n u n g s l i s t e

1      Kaverne

2      Steigrohr

3      Ausgleichsbecken

4      Luftspeise- und -entnahmeleitung

5      Gasturbine

6      Elektrogenerator

7      Elektromotor

8      Luftverdichter

9, 10  Luftzuleitungen

11     Brennkammer

12, 13  Umschaltventile

14     Blechmantel

15 ⎫
16 ⎬ Entlüftungsrohre
17 ⎭

18 ⎫
19 ⎬ Leitplatten
20 ⎭

21     Blechmantel

22 ⎫
23 ⎬ Entlüftungsrohre
24 ⎭

0030746
147/79

- 11 -

| | |
|---|---|
| 25 | |
| 26 | Leitplatten |
| 27 | |
| 28 | Entlüftungsrohre |
| 29 | |
| 30 | Seitenwände |
| 31 | |
| 32 | Obere Begrenzungswand |
| 33 | Untere Begrenzungswand |
| 34 | Schrägkanal |
| 35 | Umlenkkörper |

- 12 -

P a t e n t a n s p r ü c h e

1. Einrichtung zur Vermeidung des Ausblasens der Wasservorlage von Gleichdruckluftspeicheranlagen für Gasturbinenkraftwerke, die eine unterirdische Kaverne zur Speicherung der Druckluft und Verbindungsleitungen zwischen der
Kaverne und dem Verdichter bzw. der Gasturbine, ferner
ein Ausgleichsbecken und ein dasselbe mit der Kaverne
verbindendes Steigrohr aufweisen, gekennzeichnet durch
Entlüftungsrohre (15, 16, 17; 22, 23, 24; 28, 29), deren
obere Enden im in das Steigrohr eingebauten Zustand über
den höchsten Wasserstand des Ausgleichsbeckens hinausragen, deren untere Enden in Längsrichtung der Rohre
gegeneinander versetzt sind, sowie durch Leitelemente
(18, 19, 20; 25, 26, 27; 33, 35), die gegen die Achsen
der Entlüftungsrohre geneigt sind.

2. Einrichtung nach Anspruch 1, dadurch gekennzeichnet, dass
ein die Gesamtheit der Entlüftungsrohre (15, 16, 17) umgebender zylindrischer oder prismatischer Blechmantel
(14; 21) vorhanden ist, mit dem die Entlüftungsrohre
fest verbunden sind, dass die unteren Enden der Entlüftungsrohre (15, 16, 17; 22, 23, 24) gegenüber deren
Achsen geneigt sind, und dass die Leitelemente als Leitplatten (18, 19, 20; 25, 26, 27) ausgebildet sind, die in der Ebene der Abschrägung der unteren Entlüftungsrohrenden liegen, mit diesen am Umfang des Rohrendes wasserdicht verbunden sind und einen Teil des Steigrohrquerschnittes überdecken.

3. Einrichtung nach Anspruch 1, dadurch gekennzeichnet, dass die Gesamtheit der Entlüftungsrohre (28, 29) durch Seitenwände (30, 31) und eine obere und eine untere Begrenzungswand (32 bzw. 33) eines kastenförmigen Gebildes miteinander verbunden ist, dass das Entlüftungsrohr (29), dessen unteres Ende am höchsten liegt, ausserhalb des Steigrohrquerschnittes angeordnet ist, dass die unteren Enden der übrigen Entlüftungsrohre (28) schräg zur Rohrachse ausgebildet sind, dass die erwähnte untere Begrenzungswand (31) in der Ebene der genannten schrägen Entlüftungsrohrenden liegt, mit diesen am Umfang des Rohrendes wasserdicht verbunden ist und den ganzen Steigrohr- querschnitt überdeckt, und/dass die genannte untere Begrenzungswand (31) zusammen mit einem innerhalb des Steigrohrquerschnittes angeordneten Umlenkkörper (35) die Leitelemente bildet und mit diesem Umlenkkörper (35) einen Schrägkanal (34) begrenzt, der seitlich unterhalb des ausserhalb des Steigrohrquerschnittes liegenden Ent- lüftungsrohres (29) austritt.

FIG.1

FIG. 2

FIG. 3

FIG.4

FIG.5

FIG.6

0030746

FIG.7

FIG. 8

### Europäisches Patentamt

# EUROPÄISCHER RECHERCHENBERICHT

Nummer der Anmeldung

EP 80 20 1025.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 183 340 (G.A. RIGOLLOT)<br>* Seite 2 bis Seite 4, Zeile 18; Fig. 1 bis 3; Positionen 23, 25, 32, 34 *<br>-- | 1 |
| | DE - B - 1 544 052 (INSTITUT FOR ATOME-NERGI et al.)<br>* Spalte 4, Zeilen 48 bis 51; Spalte 6, Zeilen 15 bis 26; Fig. 4, Position 15; Fig. 6, Position 32 *<br>-- | 1 |
| | US - A - 3 516 490 (C.E. SMALLING et al.)<br>* Spalte 4, Zeilen 32 bis 35 und 44, 45; Fig. 2, 3, Positionen 27, 40, 44 *<br>-- | 1 |
| A | US - A - 2 879 646 (C.T. BRANDT)<br>* Spalte 2, Zeile 65 bis Spalte 3, Zeile 35; Fig. Positionen 11, 16, 17, 10, 18 *<br>-- | |
| A | DE - A1 - 2 550 145 (RHONE-POULENC IN-DUSTRIES)<br>* Seite 4, letzter Absatz bis Seite 6, Absatz 1; Fig. 1 *<br>-- | |
| A | DE - C - 637 313 (INTERNATIONALE PRESSLUFT UND ELEKTRIZITÄTS-GESELL-SCHAFT MBH)<br>* Seite 2, Zeilen 11 bis 34; Fig. 2, Positionen h, i *        ./..<br>-- | |

X Der vorliegende Recherchenbericht wurde für alle Patentansprüche erstellt.

**KLASSIFIKATION DER ANMELDUNG (Int. Cl.³)**

F 02 C  6/16

B 65 G  5/00

E 21 F  17/16

**RECHERCHIERTE SACHGEBIETE (Int. Cl.³)**

B 01 D  19/00

B 65 G  5/00

E 21 F  17/16

F 02 C  6/16

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| Recherchenort | Abschlußdatum der Recherche | Prüfer |
|---|---|---|
| Berlin | 19-02-1981 | STÖCKLE |

**Europäisches Patentamt**

## EUROPÄISCHER RECHERCHENBERICHT

| | EINSCHLÄGIGE DOKUMENTE | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| A | US − A − 1 302 815 (O.A. LAYNE) <br> * Seite 1, Zeile 76 bis Seite 2, <br>   Zeile 5; Fig. 4 * <br>   ──── | | |

**RECHERCHIERTE SACHGEBIETE (Int. Cl.³)**

EPA Form 1503.2   06.78